# EUROPEAN PATENT SPECIFICATION

(11) **EP 0 389 456 B1**
(45) Date of publication and mention of the grant of the patent: **27.07.1994**
(21) Application number: 90850091.1
(22) Date of filing: 05.03.1990
(51) Int. Cl.: B63B 5/24, B29C 43/12, B29C 67/14

(54) **A method for manufacturing plastic boat-hulls of sandwich construction**
Verfahren zum Herstellen von Kunststoff-Bootsrümpfen mit Sandwichaufbau
Procédé de fabrication de coques de bateau plastiques en structure du type sandwich

(30) Priority: 20.03.1989 SE 8900981
(43) Date of publication of application: 26.09.1990
(73) Proprietor: DIVINYCELL INTERNATIONAL AB, 312 22 Laholm (SE)
(72) Inventor: Segerström, Bengt, S-262 00 Ängelholm (SE); Andersson, Ingvar, S-312 01 Laholm (SE)
(74) Representative: Grennberg, Erik Bertil

(56) References cited:
- DE-A- 3 511 610
- FR-A- 2 574 341
- US-A- 4 121 008
- MOTORBOAT AND YACHTING vol. 114, no. 2370, 19 February 1971, pages 59 - 62; T. COX: 'a new technique'
- BULLETIN TECHNIQUE DU BUREAU VERITAS vol. 54, no. 8, August 1972, pages 175 - 178; C. GUIGNARD: 'construction de coques en plastique sandwich avec injection de resine sous vide'

## Description

The invention relates to a method of the kind set forth in the preamble of Claim 1.

It is known to manufacture plastic boats in this way. When applying this known method, the webs forming the inner and outer layers comprise different types of fabric, normally glass-fiber fabric, and the intermediate layer of the sandwich construction comprises a cellular plastic, preferably a closed-cell plastic. PVC-cellular plastics having closed cells are a particularly suitable material in this context, since this material has a particularly low tendency to take up water, which is a beneficial attribute in those cases where the boat is kept on land during the winter months and exposed to low-temperature conditions in which the temperature falls beneath the freezing point of water.

The cellular plastic material used is in the form of sheets which are mounted on thin web-material, e.g. non-woven fabric, and cut partially through from the opposite side in a checkered pattern to form weakenings, and then broken along the weakenings. It is normal to cut in squares with a side length of 40 mm. Such cutting of the sheets in a checkered pattern, hereinafter referred to as square-cut, enables the sheets to be bent and shaped with single-bend and double-bend surfaces, these bends resulting in the formation of wedge-shaped gaps (up to 3-4 mm) between mutually adjacent squares. These gaps must be filled, to the greatest possible extent, with the plastic material on which the square-cut sheet is mounted. In earlier known techniques, filling of the gaps has been accomplished by passing hand-held vibratory rollers over the square-cut sheet, while ensuring that the plastic material penetrates up into the gaps. Since the colour of the plastic material differs from the colour of the square-cut sheet, the fact as to whether or not the gaps have been completely filled can be ascertained. This earlier known technique, however, is beset with many drawbacks. The work involved takes a long time to complete, for instance from three to four hours in the case of a boat having a length of 40 feet, and because hardening or curing of the plastic sheet takes only about one hour, it is necessary to mount the square-cut sheet in several sections. Furthermore, problems relating to working hygiene occur, on the one hand because the hand-held vibratory rollers passed over the surface cause injury to the workmen concerned ("white fingers"), and on the other hand because the workmen need to work in the close proximity of the plastic material and therefore unavoidably breath in harmful gaseous substances (e.g. free styrene). It is also difficult to maintain quality from the aspect of mechanical strength. Furthermore, the gel-coat layer is liable to loosen, leaving an air gap and resulting in a misshapen hull.

In order to illustrate the problem of mechanical strength, it can be mentioned that when an uncut, full sheet of PVC-cellular plastic has, in relative units, a shear strength of 100, a similar sheet in which the aforesaid gaps are totally unfilled will have a shear strenght of only 70, whereas such a sheet in which said gaps have been completely filled with cured or hardened plastic material will have a shear strength of 130. It will thus be seen that the shear strength of the plastic material increases abruptly. Accordingly, the shear strength of such a sheet will still lie in the region of 70 when the gaps are filled to 95%, due to the weakenings obtained. Consequently, the fact that the mechanical strength can not be maximized when practicing known techniques and that the quality of the work cannot be guaranteed sufficiently is a serious drawback. It is known that deficiencies in this respect have resulted in shipwreck.

An object of the present invention is to provide an improvement in the aforesaid respects, i.e. from the aspect of working hygiene and mechanical strength.

This and other objects of the invention are achieved with the method defined in Claim 1. Advantageous embodiments of the invention are defined in the depending claims.

The invention will now be described with reference to a non-limiting embodiment thereof illustrated in the accompanying drawings.

Figure 1 is a schematic, cross-sectional view of a boat hull under manufacture, with one half of the hull having been completed.

Figure 2 is a schematic, cross-sectional view, in larger scale, of the vacuum treatment stage.

Since the inventive method comprises an improvement of the known technique, the earlier known method will only be described in brief.

Manufacture is commenced with a form 1 of known kind, exhibiting the shape of the hull of the boat. The inner surface of the form is coated with a layer of gel-coat, which is permitted to harden, whereafter an inner laminate 4 is applied sealingly against the gel-coat and then rubbed-down. This procedure is quite conventional and need not be described in detail here. Step strips or the like, shown at 100, form grooves on the inner surface of the inner laminate. Conforming pieces of cellular plastic are fastened in the grooves with the aid of a filler material (e.g. DIVILETTE), and the grooves are then covered with filler.

The cellular-plastic intermediate layer of the sandwich construction can now be applied. The inventive method enables a large part of the boat to be constructed at one and the same time, generally half of the boat. Pieces of so-called square-cut cellular-plastic sheeting are placed in position and the location of the edges of said sheeting are marked with the aid of a spirit pen. The cellular-plastic sheets are then lifted and the marked-out area is coated with filler (e.g. DIVILETTE) with the aid of serrated filler-blades so as to obtain a uniform filler-thickness. The thickness of the filler layer is adapted to the radius of curvature - a larger quantity of filler is required for filling gaps in areas of pronounced curvature.

The so-called square-cut material 6 is delivered in the form of cut squares having a side-measurement of, e.g. 40 mm, mounted on a fabric 6′ . The material 6 is now laid onto the previously applied layer of thermosetting plastic. In accordance with the invention, these steps are preferably carried out on one half of the boat at a time.

A spacer member 8 is now placed on the square-cut material 6. The spacer member may consist of a polyethylene mesh (e.g. 10/45 twisted, 75 mm mesh width) which corresponds to the covered surface but is somewhat smaller. Suction elements 10 are then placed at a mutual distance apart, e.g. about 3 m apart. In the illustrated embodiment, the suction elements comprise a conventional rubber sink-cleaner in which a filter 12 is inserted, e.g. a foamed plastic filter with open cells. A layer of plastic 9 is then sealingly applied, said layer having holes provided therein for accommodating suction pipes 11 belonging to the suction elements 10. The plastic layer, which may comprise a conventional builders plastic, is then drawn over the so-called square-cut material, secured with staples and sealed-off with adhesive tape around the suction elements. The suction pipes 11 are connected to suction hoses, which in turn are connected to a vacuum pump (e.g. a side channel pump), and a partial vacuum of 0.8-0.95, preferably 0.9 times atmospheric pressure is applied. The applied thermosetting resin, which in the illustrated embodiment has a blue colour whereas the square-cut foamed plastic is white, is readily visible when drawn by suction through the gaps 5, and suction is continued until a clear, full checkered pattern can be seen over the whole of the covered surface of the construction plastic, the time taken normally being five to ten minutes. One is then assured that the joints are completely filled. The builders plastic, the spacer mesh and suction device can now be removed and re-used.

A lower vacuum than the aforementioned is highly unsuitable, since vapour can be otherwise withdrawn from the still uncured plastic, causing the formation of bubbles which impair mechanical strength and durability.

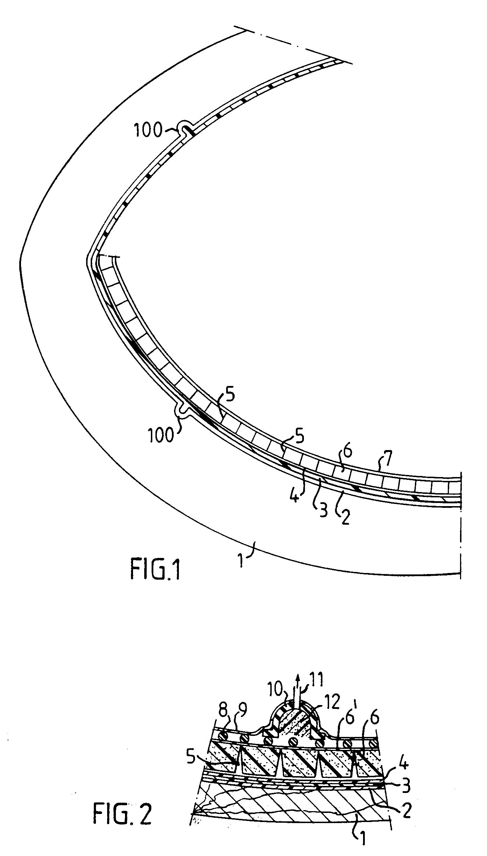

Because this suction operation takes a few minutes to complete, it is possible to also finish the other half of the boat before the thermosetting resin has cured or set, and to apply further thermosetting resin and lay the inner laminate 7 directly over the whole boat (Figure 1) wet-in-wet against the so-called square-cut cellular-plastic, or more specifically the fabric 6′ on which the square-cut plastic is mounted, which results in particularly good attachment between the inner laminate 7 and the cellular plastic 6.

In addition to the aforesaid advantages of improved working hygiene and positive filling of the gaps and thus an assured high mechanical strength, the vacuum suction step according to the invention also affords the advantage of enabling the work involved to be carried out rapidly and efficiently. Because large surfaces can be constructed simultaneously and because curing or setting of the thermosetting resin, both with respect to the cellular-plastic layer and the inner laminate, can take place in parallel, a considerable saving in time is achieved and productivity increased, while guaranteeing an improved quality at the same time. This improved guarantee with respect to mechanical strength also avoids the need of over-dimensioning with the safety factors unaffected.

## Claims

1. A method for manufacturing boat hulls from plastic materials in a sandwich construction, comprising providing the inner surface of a form (1), which has a shape corresponding to the outer shape of the hull with a layer (2) of gel-coat; allowing the gel-coat to set; applying on the gel-coat layer an outer laminate (3), which is also allowed to set; applying onto the outer laminate a layer of hardenable plastic material (4); placing on the layer of plastic material a so-called square-cut layer (6) of hard cellular plastic, preferably so-called square-cut PVC-plastic having closed cells; and placing on the so-called square-cut plastic an inner laminate (7), wherein the outer laminate (3), the intermediate cellular-plastic layer (6) and the inner laminate (7) form a sandwich construction where the cellular-plastic layer is secured by hardening of said thermosetting plastic material, characterized in that when said so-called square-cut foamed-plastic layer (6) has been placed on the still soft, thermosetting plastic material, a spacer member (8) and a sealing layer (9) are applied and a partial vacuum is applied beneath the sealing layer, thereby to cause the hardenable plastic material (4) to be drawn up through the gaps (5) formed when square-cutting said material.

2. A method according to Claim 1, characterized in that the inner laminate (7) is applied prior to hardening of the hardenable plastic material (4) and is thus secured wet-in-wet subsequent to applying said partial vacuum.

3. A method according to Claim 1 or 2, characterized in that the hardenable plastic material (4) used is a polyester resin incorporating small glass beads.

4. A method according to any one of the preceding claims, characterized in that the partial vacuum equals 0.8-0.95, preferably 0.9 times atmospheric pressure.

5. A method according to Claim 2, characterized in that the so-called square-cut cellular plastic material (6) is applied and vacuum-treated on one half of the boat at a time, whereafter the inner laminate (7) is applied over the whole of the inner surface of the boat prior to hardening of the hardenable plastic material (4).

6. A method according to any one of the preceding claims, characterized in that the colour of the hardenable plastic material (4) differs from the colour of the inwardly facing surface of the so-called square-cut cellular-plastic material (6); and in that the sealing layer (9) consists of a transparent plastic foil, thereby enabling it to be visually ascertained whether or not the gaps (5) in the so-called square-cut plastic material have been completely filled.

## Patentansprüche

1. Verfahren zum Herstellen von Kunststoffbootsrümpfen mit Sandwich-Aufbau, bei welchem die Innenfläche einer Form (1), die eine der Außenform eines Bootsrumpfes entsprechende Form aufweist, mit einer Schicht (2) aus Gelcoat überzogen wird, der Gelcoat aushärten gelassen wird, auf die Gelcoat-Schicht ein äußeres Laminat (3) aufgebracht wird, welches ebenfalls aushärten gelassen wird, worauf auf das äußere Laminat eine Schicht aus aushärtbarem Kunststoffmaterial (4) aufgetragen wird, danach auf die Schicht aus Kunststoffmaterial eine sogenannte quadratgeschnittene Schicht (6) aus hartem zellularem Kunststoff angeordnet wird, vorzugsweise sogenannter quadratgeschnittener PVC-Kunststoff mit geschlossenen Zellen, und wonach auf dem sogenannten quadratgeschnittenen Kunststoff ein inneres Laminat aufgetragen wird, wobei das äußere Laminat (3) die dazwischenliegende Schicht (6) aus zellularem Kunststoff und das innere Laminat (7) eine Sandwich-Konstruktion bilden, bei der die zellulare Kunststoffschicht durch Härten des warmaushärtenden Kunststoffmaterials befestigt wird, dadurch gekennzeichnet, daß, wenn die sogenannte quadratgeschnittene Schaumkunststoffschicht (6) auf dem noch weichen warmaushärtenden Kunststoffmaterial angeordnet wurde, ein Abstandhalterteil (8) und eine dichtende Schicht (9) angebracht werden, und ein teilweises Vakuum unterhalb der abdichtenden Schicht angelegt wird, um dadurch das aushärtbare Kunststoffmaterial (4) nach oben durch die Spalten (5) zu ziehen, welche beim Schneiden des Materials in Quadrate gebildet werden.

2. Verfahren nach Anspruch 1, dadurch gekennzeichnet, daß das innere Laminat (7) aufgebracht wird, ehe das Aushärten des aushärtbaren Kunststoffmaterials (4) erfolgt und folglich naß in naß anschließend an das Anlegen des teilweisen Unterdrucks befestigt wird.

3. Verfahren nach Anspruch 1 oder 2, dadurch gekennzeichnet, daß das verwendete aushärtbare Kunststoffmaterial (4) ein Polyesterharz ist, welches kleine Glasperlen enthält.

4. Verfahren nach einem der vorstehenden Ansprüche, dadurch gekennzeichnet, daß der teilweise Unterdruck 0,8 bis 0,95, vorzugsweise 0,9 des atmosphärischen Drucks, beträgt.

5. Verfahren nach Anspruch 2, dadurch gekennzeichnet, daß das sogenannte quadratgeschnittene zellulare Kunststoffmaterial jeweils gleichzeitig auf einer Bootshälfte aufgebracht und mit Unterdruck behandelt wird, wonach das innere Laminat (7) über die gesamte Innenfläche des Bootes vor dem Aushärten des aushärtbaren Kunststoffmaterials aufgelegt wird.

6. Verfahren nach einem der vorstehenden Ansprüche, dadurch gekennzeichnet, daß sich die Farbe des aushärtbaren Kunststoffmaterials (4) von der Farbe der nach innen weisenden Oberfläche des sogenannten quadratgeschnittenen zellularen Kunststoffmaterials (6) unterscheidet, und daß die Dichtschicht (9) aus einer durchsichtigen Kunststoff-Folie besteht, so daß durch Sichtkontrolle festgestellt werden kann, ob oder ob nicht die Spalten (5) in dem sogenannten quadratgeschnittenen Kunststoffmaterial vollständig gefüllt wurden.

## Revendications

1. Procédé pour fabriquer des coques de bateau à partir de matières plastiques, selon une structure en sandwich, comprenant les étapes qui consistent à pourvoir d'une couche (2) d'enduit gélifié, la surface intérieure d'un gabarit (1) qui présente une forme correspondant à la forme extérieure de la coque; à laisser prendre l'enduit gélifié; à appliquer, sur la couche d'enduit gélifié, un stratifié extérieur (3), qu'on laisse également prendre; à appliquer, sur le stratifié extérieur, une couche de matière plastique durcissable (4); à placer, sur la couche de matière plastique, une couche (6) de matière plastique alvéolaire dure découpée en carrés, de préférence de PVC découpé en carrés ayant des alvéoles fermées; et à placer, sur la matière plastique découpée en carrés, un stratifié intérieur (7), procédé selon lequel le stratifié extérieur (3), la couche de matière plastique alvéolaire intermédiaire (6) et le stratifié intérieur (7) forment une structure en sandwich dans laquelle la couche de matière plastique alvéolaire est fixée par durcissement de ladite matière plastique thermodurcissable, caractérisé en ce que, quand ladite couche de matière plastique alvéolaire découpée en carrés (6) a été placée sur la matière plastique thermodurcissable encore molle, un élément d'écartement (8) et une couche d'étanchéité (9) sont posés et un vide partiel est établi sous la couche d'étanchéité, contraignant ainsi la matière plastique durcissable (4) à être tirée à l'intérieur des interstices (5) formés lors du découpage en carrés de ladite matière.

2. Procédé selon la revendication 1, caractérisé en ce que le stratifié intérieur (7) est appliqué avant le durcissement de la matière plastique durcissable (4) et est ainsi fixé, humide-sur-humide, consécutivement à l'établissement dudit vide partiel.

3. Procédé selon la revendication 1 ou 2, caractérisé en ce que la matière plastique durcissable (4) utilisée est une résine polyester renfermant de petites billes de verre.

4. Procédé selon l'une quelconque des revendications précédentes, caractérisé en ce que le vide partiel équivaut à 0,8-0,95, de préférence 0,9, fois la pression atmosphérique.

5. Procédé selon la revendication 2, caractérisé en ce que la matière plastique alvéolaire découpée en carrés (6) est posée et est soumise au vide sur une moitié du bateau à la fois, après quoi le stratifié intérieur (7) est appliqué sur la totalité de la surface intérieure du bateau avant que la matière plastique durcissable (4) ait durci.

6. Procédé selon l'une quelconque des revendications précédentes, caractérisé en ce que la couleur de la matière plastique durcissable (4) est différente de la couleur de la surface, tournée vers l'intérieur, de la matière plastique alvéolaire découpée en carrés (6); et en ce que la couche d'étanchéité (9) consiste en une feuille de matière plastique transparente, permettant ainsi de déterminer visuellement si les interstices (5) formés dans la matière plastique découpée en carrés ont été ou non complètement remplis.
